# EUROPEAN PATENT SPECIFICATION

(11) **EP 3 582 133 B1**
(45) Date of publication and mention of the grant of the patent: **05.01.2022**
(21) Application number: 19180291.7
(22) Date of filing: 14.06.2019
(51) Int. Cl.: G06F 21/62, H04W 12/02, H04L 9/08, H04L 9/14

(54) **METHOD FOR DE-IDENTIFYING DATA**
VERFAHREN ZUR ENTIDENTIFIZIERUNG VON DATEN
PROCÉDÉ DE DÉSIDENTIFICATION DE DONNÉES

(30) Priority: 15.06.2018 SE 1850734
(43) Date of publication of application: 18.12.2019
(73) Proprietor: Avident-IT AB, 931 70 Skellefteå (SE)
(72) Inventor: MEIJER, Hans, 931 70 Skellefteå (SE); GYLLSDORFF, Leif, 132 52 Saltsjö-Boo (SE)
(74) Representative: Zacco Sweden AB

(56) References cited:
- EP-A1- 2 653 984
- US-A1- 2004 010 699
- US-A1- 2016 070 917
- US-A1- 2017 177 683

## Description

### TECHNICAL FIELD

The present disclosure relates to a method for de-identifying data. Further, the disclosure relates to a computer program carrying out the method for de-identifying data. Yet further, the disclosure relates a computer-readable medium carrying out the method for de-identifying data.

### BACKGROUND ART

By international and national regulations, higher demands are placed on handling sensitive data. Specifically in the area where personal data and company data are handled. Among others, the new European Data Protection Act, General Data Protection Regulation, GDPR, specifies how personal data are to be handled. Further, in the Unites States of America there are some fragmented, sector or state-oriented approaches to data privacy, such as Health Insurance Portability and Accountability Act, HIPAA, which provides data privacy and security provisions for safeguarding medical information.

When processes of de-identifying information are introduced, they often lead to that the data loses its meaning and the correctness can be questioned. Types of such identification can be encryption, tokenization via algorithm or tokenization via lookup tables. These de-identification processes render in that the accuracy of data in test environments may be difficult to verify or even to identify as accurate data.

Accordingly, there is a need to address these shortcomings in handling of personal data and company data. Further, a need to comply with present and future data protection regulations is identified.

Document US2017177683, US2004010699, EP2653984 and US2016070917 discloses background art. US2017177683 discloses an anonymization system including encryption apparatus, anonymization apparatus and decryption apparatus. US2004010699 discloses encrypting a plurlatiy of fields, wherein each field is encrypted with a unique key. EP2653984 discloses anonymizing data within a database. US2016070917 discloses how structured data is accessed for encoding.

The disclosure relates to a method for de-identifying data of a plurality of data fields. The method comprising the steps of:
- receiving data of an entity comprising a plurality of data fields of data to be de-identified;
- determining an entity key for said entity;
- generating, for each data field, a data field-specific encryption key based on metadata of that data field and said entity key;
- generating, for each data field, a data field-specific randomization value based on metadata of that data field;
- encrypting, for each data field, said data field-specific randomization value by means of said data field-specific encryption key;
- generating, for each data field, de-identified entity data from said received entity data using said encrypted data field-specific randomization value; and
- storing said entity key, said data field-specific encryption keys and said encrypted data field-specific randomization values.

An advantage is that, with knowledge of the entity key, the data field-specific encryption key and the data field-specific randomization value, the same de-identified data can be obtained repeatedly without compromising the integrity of original entity data. Thus, the generated entity data is anonymized, rather than pseudonymized. However, the method provides for the possibility re-generate the same anonymized entity data from the received entity data over and over again. Thus, re-usable and reproducible test data for entities is obtained.

In another aspect, the step of generating, for each data field, de-identified data from said received entity data using said encrypted data field-specific randomization value, further comprises the step of determining, for each data field, if said received entity data of said data field is to be: normalized, randomized via a field-specific list or randomized via a set of field-specific format rules. An advantage is that it is possible to handle different types of data fields in different ways in order to obtain de-identified data of correct format for each field.

In a further aspect, for each data field that is to be normalized, the data is adjusted to a value within a predetermined range for that specific data field. An advantage is that the entity cannot be de-anonymized by a value that is abnormal, i.e. outside the predetermined range for that specific data field. Such an abnormal value may for example be a very high salary or an age, which stands out in a group of entities.

In yet a further aspect, for each data field that is to be randomized via a field-specific list, the method comprises the step of substituting the received data of that field by a text string from the field-specific list, wherein said text string is randomized using said encrypted data field-specific randomization value. An advantage is that the field-specific list can be chosen separately for each specific case in order to comply with local and/or national standards and rules.

In another aspect, for each data field that is to be randomized via a set of field-specific format rules, the method comprises the steps of: substituting a part of the received data of that field using said data field-specific randomization value; and determining, based on the encrypted part of the received data of that field a checksum that fulfils said set of field-specific format rules. An advantage is that the set of field-specific format rules and the checksum can be chosen separately for each specific case in order to comply with local and/or national standards and rules.

In a further aspect, the step of generating, for each data field, a data field-specific randomization value, further comprises the steps of determining if the data field comprises a plurality of data items; and if so, generating, for each data item of the data field, a data item-specific randomization value. An advantage is that data items of a data field can be protected by different values, thereby making it more difficult to identify patterns of the data.

In another aspect, the step of determining an entity key for said entity comprises selecting one data field as an identifier of the entity; and determining the entity key based on the data in the data field set as the identifier of the entity. An advantage is that entities having the same entity data in the data field selected as identifier of the entity will have the same entity key. Thus, those entities having the same entity key can be handled group wise.

In a further aspect, the step of determining an entity key for said entity comprises determining a checksum based on the data of a plurality of the data fields of the entity, wherein the checksum corresponds to the entity key of the entity. An advantage is that each unique combination of entity data in the data fields, from which the checksum is determined, will generate a unique checksum. Thus, it is harder to de-anonymize the entity data.

Additionally, the disclosure relates to a computer program comprising instructions which, when the program is executed by a computing device, cause the computing device to carry out the method. Further, the disclosure relates to a computer-readable medium comprising instructions which, when executed by a computing device, cause the computing device to carry out the method.

### BRIEF DESCRIPTION OF THE DRAWINGS

The disclosure will be further described with reference to the accompanying drawings:
FIG. 1 shows an overview of the computer program according to the disclosure.
FIG. 2 shows a flow chart of the method according to the disclosure.
FIG. 3 shows an aspect of the method according to the disclosure.
FIG. 4A shows an example of received entity data comprising six data fields for each entity and three entities.
FIG. 4B shows an example of de-identified data of the received entity data presented in FIG. 4A.

### DETAILED DESCRIPTION

GDPR and similar regulations and laws require that personal data can be deleted or de-identified. On the other hand, there is a need to keep most parts of the entity's data in order to keep track of the data and draw conclusions from data from a large number of entities. For example, there might be a need to keep a client register having sufficient details in order to statistically refer to the number of clients, sales and so on. This disclosure among others aims at mitigating these problems.

Below follows a definition of each of the terms used in the disclosure:
Entity: Person, group, company etc.
De-identified data: De-identified data has been manipulated to prevent the identity of the entity from being revealed. De-identified data may be anonymized or pseudonymized.
Anonymized data: Data rendered anonymous in such a way that the data subject is not or no longer identifiable. Anonymized data can never be restored to its original state.
Pseudonymized data: Data processed so that the data can no longer be attributed to a specific data subject without the use of additional information. Pseudonymized data can be restored to its original state with the use of additional information, which allows individuals to be reidentified.
Data field: Each data field comprises specific information regarding the entity, such as name, address, city, ZIP code, e-mail address, bank account information, gender, age, salary, ID number, social security number etc.
Data item: In this application a data item is defined as a part of the information in a data field. The information may be separated by any of space, comma, colon, semi-colon etc. For example, if the information in the data field is a name comprising family name and given name, each of the names is a separate data item.
Metadata of a data field: The metadata of each data field describes which type of information regarding the entity that is presented in that specific data field, such as name, address, city, ZIP code, e-mail address, bank account information, gender, age, salary, ID number, social security number etc.
Entity key: The entity key used for protection of original entity data and reproduction of de-identified entity data from original entity data. The entity key encloses all data fields on an entity.
Data field-specific encryption key: The encryption key may be based on either block ciphers or stream ciphers. Block ciphers take a number of bits and encrypt them as a single unit, padding the plaintext so that it is a multiple of the block size. Block ciphers may be symmetric or asymmetric. Stream ciphers encrypt the digits, or letters of a message, one at a time. Among others, the following symmetric-key algorithms may be used: Twofish, Serpent, AES (Rijndael), Blowfish, CASTS, Kuznyechik, RC4, 3DES, Skipjack, Safer+/++ (Bluetooth), and IDEA. Stream ciphers may be symmetric or asymmetric.
Data field-specific information: Information presented in a predefined format for a specific data field. The predefined format may be letters (as in name, city etc.) or numbers (as in ZIP code, age, birth date etc.). Further, the predefined format may include a combination of letters/numbers and symbols (as in email address).
Data field-specific randomization value: Each data field-specific randomization value is dependent on the metadata of that data field. In others words, the randomization value depends on which type of information that is presented in that specific data field. The randomization value may be based on, among others, normalization, randomization via a field-specific list or randomization via a set of field-specific format rules.
Normalized data: Data, in form a value, which has been adjusted to a value within a predefined interval or a predefined value representing a normal value.
Field-specific list: Each of the fields may comprise a list of data strings specific for that field in order to generate realistic test data. For example, a first name field comprises a list of suitable first names, a family name field comprises a list of suitable family names, a city field comprises a list of suitable city names, etc.
Set of field-specific format rules: Some of the fields may comprise data according to predefined format rules. In those cases, a set of field-specific format rules ensure that the generated test data is presented in accordance with the pre-defined format rules for that field. Examples of such fields are e-mail address, bank account information, national identification number, social security number and ZIP codes. E-mail addresses may be treated as two different text strings separated by an @ sign, the local part of the address (often the username of the recipient) and the domain name. National identification number may comprise birth date and checksum digit(s), etc.

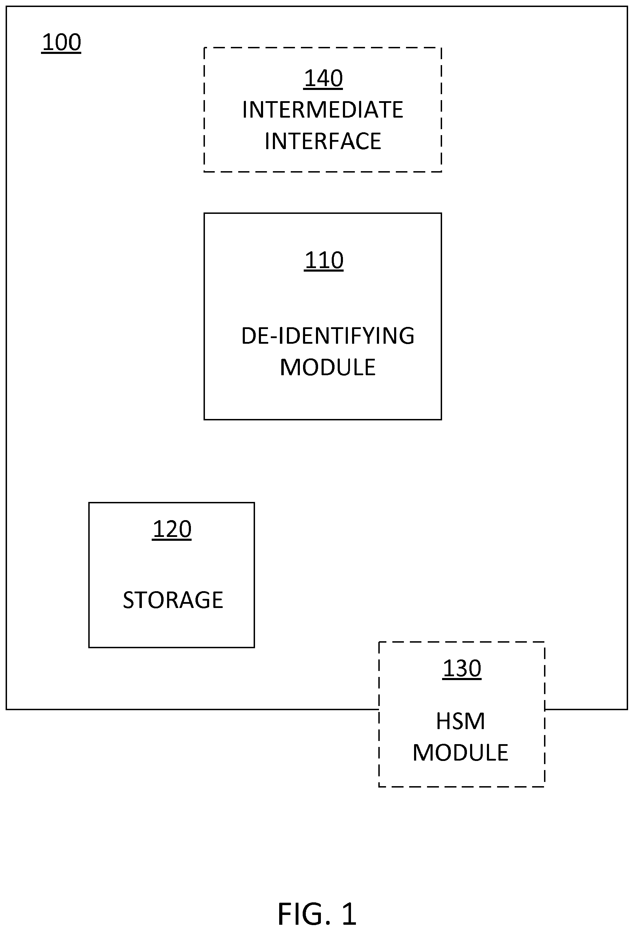

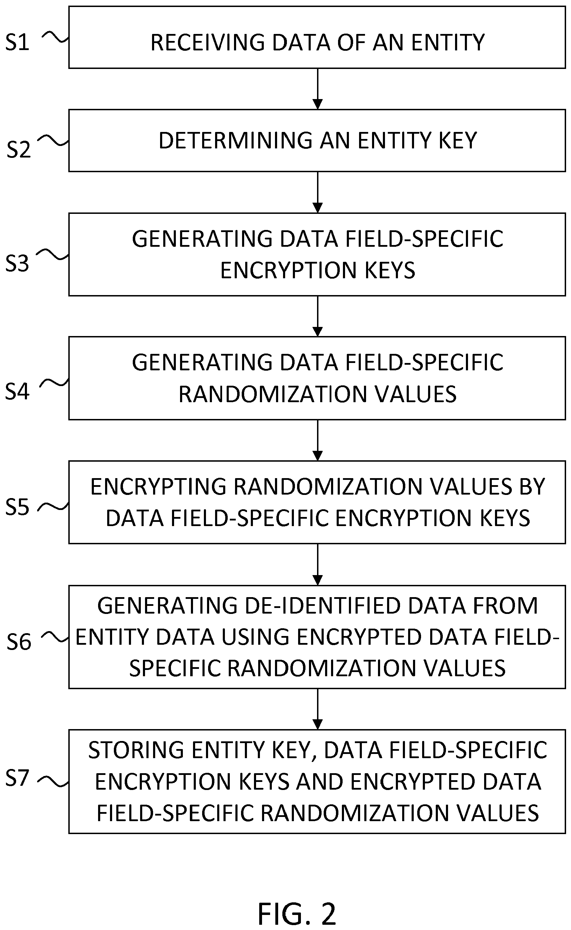

FIG. 1 shows an overview of a computer program 100 according to the disclosure. The computer program 100 comprises a de-identifying module 110, which is responsible for de-identifying data from entities. The de-identifying module 110 is configured to carry out the method described in relation to FIGS. 2-3 in order to de-identify data of entities. The computer program 100 comprises instructions, which, when the program is executed by a computing device, cause the computing device to carry out the method.

Further, the computer program 100 has access to a storage 120. The storage 120 comprises a non-volatile memory. The storage 120 is configured to store encryptions keys, randomized values, entity keys, field-specific lists and field-specific format rules for de-identification of entities and reproducibility of de-identified data of entities. The de-identifying module 110 is connected to the storage 120. The communication between the de-identifying module 110 and the storage 120 is encrypted. The communication between the de-identifying module 110 and the storage 120 may be encrypted via Transport Layer Security, TLS, or Secure Sockets Layer, SSL.

In one aspect of the disclosure, the de-identifying module 110 is configured to generate encryption keys and randomization values. This is achieved using random number generator.

According to another aspect of the disclosure, a Hardware Security Module, HSM, 130 is connected to the de-identifying module 110 and the storage 120. The Hardware Security Module, HSM, 130, is configured to, at least partly, generate encryption keys and randomization values. This is achieved using a random number generator. The Hardware Security Module 130 may be security classified as Federal Information Processing Standards, FIPS, 140-2, according to any of level 1 to 4. The Hardware Security Module 130 may be either software based or hardware based. The communication between the Hardware Security Module, HSM, 130 and the de-identifying module 110 or the storage 120 is encrypted. The communication between the Hardware Security Module, HSM, 130 and the de-identifying module 110 or the storage 120 may be encrypted via Transport Layer Security, TLS, or Secure Sockets Layer, SSL.

In one aspect of the disclosure, the protection of the encryptions keys, randomized values and the entity keys will comply with the National Institute of Standards and Technology, NIST SP 800-57, standard with regard to protection and rotation of keys.

According to one aspect of the disclosure, the computer program 100 further comprises an intermediate interface 140, situated between incoming data of entities and the de-identifying module 110. The intermediate interface 140 is configured to check if the data of the entities is to be protected, and if so, the de-identifying module 110 is used.

FIG. 2 shows a flow chart of the method according to the disclosure. The method aims at de-identifying data of a plurality of data fields. The method comprises the steps of:
- Receiving S1 data of an entity comprising a plurality of data fields of data to be de-identified.
- Determining S2 an entity key for said entity.
- Generating S3, for each data field, a data field-specific encryption key based on metadata of that data field and said entity key. In order to generate a data field-specific encryption key that comprises a number of bytes, a random number generator may be used that has enough entropy to be a true random number generator. The size of the random number bytes generated may be dependent on the specific algorithm chosen. For example, if the algorithm AES-256 is used, having 256 bits of random data or 32 bytes, then the random number generator will generate 32 bytes of data.
- Generating S4, for each data field, a data field-specific randomization value based on metadata of that data field. In order to generate the data field-specific randomization value the same random number generator may used as for creating data field specific encryption key. The range of the randomization value to be generated may be predefined and generated using metadata of that field. If a field-specific list exists for that data field, the range of the randomization value may correspond to the number of items in the field-specific list.
- Encrypting S5, for each data field, said data field-specific randomization value by means of said data field-specific encryption key.
- Generating S6, for each data field, de-identified entity data from said received entity data using said encrypted data field-specific randomization value.
- Storing S7 said entity key, said data field-specific encryption keys and said encrypted data field-specific randomization values.

An effect is that, with knowledge of the entity key, the data field-specific encryption key and the data field-specific randomization value, the same de-identified data can be obtained repeatedly without compromising the integrity of original entity data. Thus, the generated entity data is anonymized, rather than pseudonymized. However, the method provides for the possibility re-generate the same anonymized entity data from the received entity data over and over again. Thus, re-usable and reproducible test data for entities is obtained. Hence, the next time the same original entity data is received by the computer program 100, the computer program 100 can obtain the same de-identified data, by retrieving said entity key, said data field-specific encryption keys and said encrypted data field-specific randomization values from the storage 120.

The method is carried out, at least partly, by the de-identifying module 110. In one aspect, steps S1-S6 are carried out by the de-identifying module 110. Further, the de-identifying module 110 is configured to send said entity key, said data field-specific encryption keys and said encrypted data field-specific randomization values to the storage 120. The de-identifying module 110 may comprise, or be connected to, a cache memory and/or a volatile memory configured to store said entity key, said data field-specific encryption keys and said encrypted data field-specific randomization values when the method is carried out. In one aspect of the disclosure, the storage 120 is configured to store said entity key, said data field-specific encryption keys and said encrypted data field-specific randomization values also when the method is carried out.

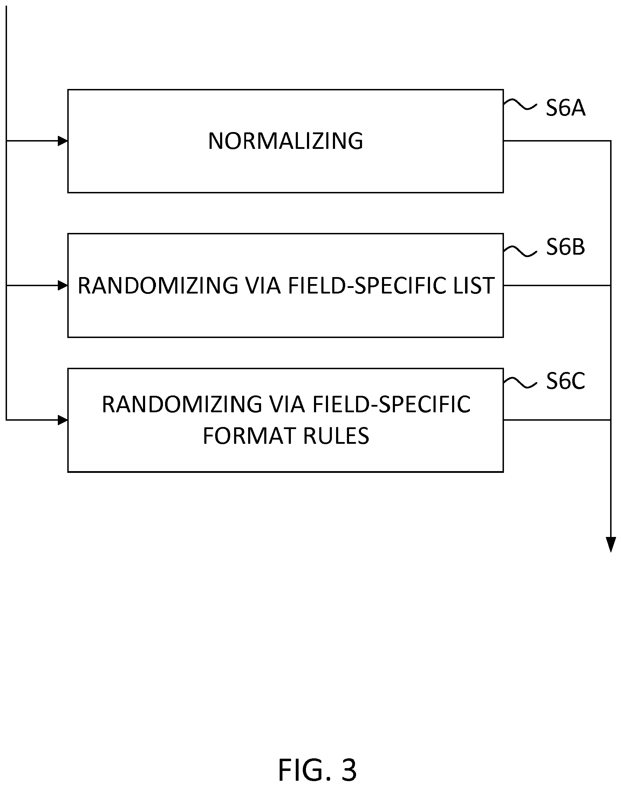

FIG. 3 shows an aspect of the method according to the disclosure. The step of generating S6, for each data field, de-identified data from said received entity data using said encrypted data field-specific randomization value, further comprises the step of determining, for each data field, if said received entity data of said data field is to be normalized S6A, randomized via a field-specific list S6B or randomized via a set of field-specific format rules S6C. Consequently, the data of each data field is either normalized S6A, randomized via a field-specific list S6B or randomized via a set of field-specific format rules S6C, in order to generate de-identified data.

In a further aspect, for each data field that is to be normalized S6A, the data is adjusted to a value within a predetermined range for that specific data field. An effect is that the entity cannot be de-anonymized by a value that is abnormal, i.e. outside the predetermined range for that specific data field. Such an abnormal value may for example be a very high salary or an age, which stands out in a group of entities.

In a yet further aspect, for each data field that is to be randomized via a field-specific list S6B, the method comprises the step of substituting the received data of that field by a text string from the field-specific list, wherein said text string is randomized using said encrypted data field-specific randomization value. An advantage is that the field-specific list can be chosen separately for each specific case in order to comply with local and/or national standards and rules.

In another aspect, for each data field that is to be randomized via a set of field-specific format rules S6C, the method comprises the steps of: substituting a part of the received data of that field using said data field-specific randomization value; and determining, based on the encrypted part of the received data of that field a checksum that fulfils said set of field-specific format rules. An advantage is that the set of field-specific format rules and the checksum can be chosen separately for each specific case in order to comply with local and/or national standards and rules.

In a yet further aspect, the step of generating S4, for each data field, a data field-specific randomization value, further comprises the steps of determining if the data field comprises a plurality of data items; and if so, generating, for each data item of the data field, a data item-specific randomization value. An advantage is that data items of a data field can be protected by different values, thereby making it more difficult to identify patterns of the data.

In another aspect, the step of determining S2 an entity key for said entity comprises selecting one data field as an identifier of the entity; and determining the entity key based on the data in the data field set as the identifier of the entity. An advantage is that entities having the same entity data in the data field selected as identifier of the entity, will have the same entity key. Thus, those entities having the same entity key can be handled group wise.

In a further aspect, the step of determining S2 an entity key for said entity comprises determining a checksum based on the data of a plurality of the data fields of the entity, wherein the checksum corresponds to the entity key of the entity. An advantage is that each unique combination of entity data in the data fields, from which the checksum is determined, will generate a unique checksum. Thus, it is harder to de-anonymize the entity data.

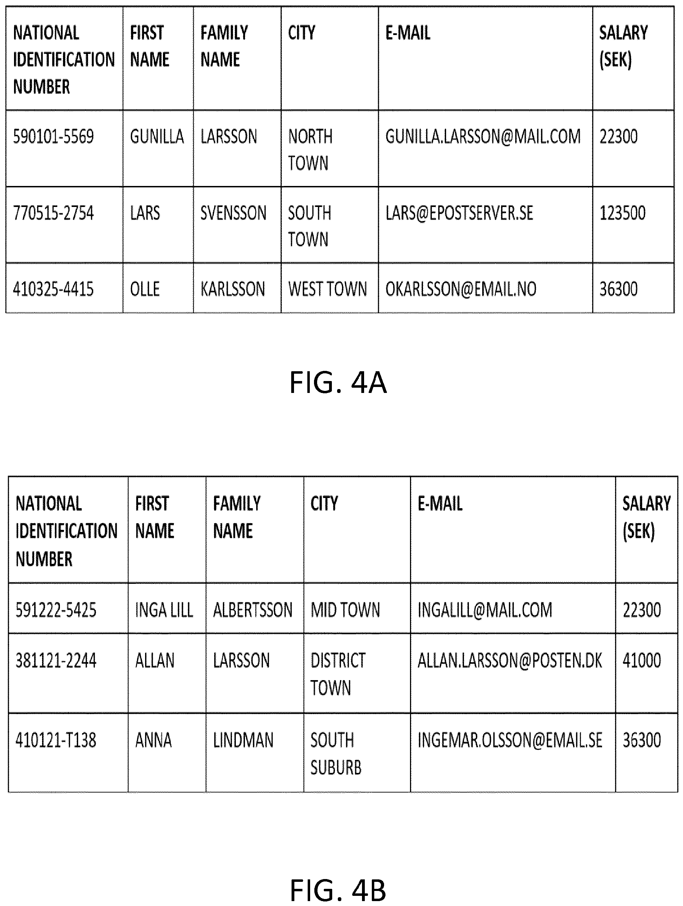

FIG. 4A shows an example of received entity data comprising six data fields for each entity and three entities. In this example, the data fields represents national identification number, first name, family name, city, e-mail and salary given in SEK (Swedish kronor) per month. In this example, the received entity data of the data fields of first name, family name and city, will be randomized via a field-specific list S6B. The e-mail field will be treated as two different text strings separated by an @ sign, the username of the recipient and the domain name. The national identification number comprises birth date and checksum digits. The received data in the data field of national identification number will be randomized via a set of field-specific format rules S6C in order to comply with rules on how to present birth date and checksum digits as a function of the generated birth date. When comparing salaries of the three entities, it can be seen that the second entity, Lars Svensson, has a salary, 123 500 SEK/month, which is much higher than the respective salary of the other two entities. Thus, this is an indication that a normalization of the salary value is needed. Hence, for the data field representing the salary, the received entity data will be normalized S6A, so that the second entity cannot be de-anonymized by the abnormal salary value. FIG. 4B shows an example of de-identified data of the received entity data presented in FIG. 4A.

Additionally, the disclosure relates to a computer program comprising instructions which, when the program is executed by a computing device, cause the computing device to carry out the method described in relation to FIG. 2 or FIGS. 2 and 3. Further, the disclosure relates to a computer-readable medium comprising instructions which, when executed by a computing device, cause the computing device to carry out the method described in relation to FIG. 2 or FIGS. 2 and 3.

## Claims

1. A method, carried out by a computer program (100), for de-identifying data of a plurality of data fields, the method comprising the steps of:
- receiving (S1) data of an entity comprising a plurality of data fields of data to be de-identified;
- determining (S2) an entity key for said entity;
- generating (S3), for each data field, a data field-specific encryption key based on metadata of that data field and said entity key;
- generating (S4), for each data field, a data field-specific randomization value based on metadata of that data field;
- encrypting (S5), for each data field, said data field-specific randomization value by means of said data field-specific encryption key;
- generating (S6), for each data field, de-identified entity data from said received entity data using said encrypted data field-specific randomization value; and
- storing (S7) said entity key, said data field-specific encryption keys and said encrypted data field-specific randomization values; and
wherein the step of generating (S6), for each data field, de-identified data from said received entity data using said encrypted data field-specific randomization value, further comprises the step of:
- determining, for each data field, if said received entity data of said data field is to be normalized (S6A) by adjusting the entity data to a value within a predetermined range for that specific data field; randomized via a field-specific list (S6B) by substituting the received data of that data field by a text string from the field-specific list, wherein said text string is randomized using said encrypted data field-specific randomization value; or randomized via a set of field-specific format rules (S6C) by substituting a part of the received entity data of that data field using said data field-specific randomization value and determining, based on the substituted part of the received entity data of that data field a checksum that fulfils said set of field-specific format rules.

2. The method of any of the preceding claims, wherein the step of generating (S4), for each data field, a data field-specific randomization value, further comprises the steps of:
- determining if the data field comprises a plurality of data items; and
- if so, generating, for each data item of the data field, a data item-specific randomization value.

3. The method of any of the preceding claims, wherein the step of determining (S2) an entity key for said entity comprises:
- selecting one data field as an identifier of the entity;
- determining the entity key based on the data in the data field set as the identifier of the entity.

4. The method of any of the preceding claims, wherein the step of determining (S2) an entity key for said entity comprises:
- determining a checksum based on the data of a plurality of the data fields of the entity, wherein the checksum corresponds to the entity key of the entity.

5. A computer program (100) comprising instructions which, when the program is executed by a computing device, cause the computing device to carry out the method according to any of claims 1 to 4.

6. A computer-readable medium comprising instructions which, when executed by a computing device, cause the computing device to carry out the method according to any of claims 1 to 4.

## Patentansprüche

1. Verfahren, das von einem Computerprogramm (100) ausgeführt wird, zur De-Identifizierung von Daten einer Vielzahl von Datenfeldern, welches Verfahren die folgenden Schritte umfasst:
- Empfangen (S1) von Daten einer Einheit umfassend eine Vielzahl von Datenfeldern von zu de-identifizierenden Daten;
- Bestimmen (S2) eines Einheitsschlüssels für die Einheit;
- Erstellen (S3) eines datenfeldspezifischen Verschlüsselungsschlüssels für jedes Datenfeld basierend auf Metadaten dieses Datenfeldes und des Einheitsschlüssels;
- Erstellen (S4) eines datenfeldspezifischen Random isierungswertes für jedes Datenfeld basierend auf Metadaten dieses Datenfeldes;
- Verschlüsseln (S5) des datenfeldspezifischen Randomisierungswertes für jedes Datenfeld mittels des datenfeldspezifischen Verschlüsselungsschlüssels;
- Erstellen (S6) von de-identifizierten Einheitsdaten aus den empfangenen Einheitsdaten für jedes Datenfeld durch die Verwendung des verschlüsselten datenfeldspezifischen Randomisierungswertes; und
- Speichern (S7) des Einheitsschlüssels, der datenfeldspezifischen Verschlüsselungsschlüssel und der verschlüsselten datenfeldspezifischen Randomisierungswerte; und
wobei der Schritt des Erstellens (S6) von de-identifizierten Daten aus den empfangenen Einheitsdaten für jedes Datenfeld durch die Verwendung des verschlüsselten datenfeldspezifischen Randomisierungswertes ferner den folgenden Schritt umfasst;
- Bestimmen für jedes Datenfeld, ob die empfangenen Einheitsdaten des Datenfeldes durch Einstellen der Einheitsdaten auf einen Wert innerhalb eines vorbestimmten Bereichs für dieses spezifische Datenfeld zu normalisieren (S6A) sind; über eine feldspezifische Liste (S6B) durch Ersetzen der empfangenen Daten dieses Datenfeldes durch eine Textzeichenfolge aus der feldspezifischen Liste zu randomisieren sind, wobei die Textzeichenfolge durch die Verwendung des verschlüsselten datenfeldspezifischen Randomisierungswertes randomisiert wird; oder über einen Satz feldspezifischer Ausführungsregeln (S6C) durch Ersetzen eines Teils der empfangenen Einheitsdaten dieses Datenfeldes durch die Verwendung des datenfeldspezifischen Randomisierungswertes und Bestimmen einer Prüfsumme, die den Satz von feldspezifischen Ausführungsregeln erfüllt, basierend auf dem ersetzten Teil der empfangenen Einheitsdaten dieses Datenfeldes zu randomisieren sind.

2. Verfahren nach einem der vorhergehenden Ansprüche, wobei der Schritt des Erstellens (S4) eines datenfeldspezifischen Randomisierungswertes für jedes Datenfeld ferner die folgenden Schritte umfasst:
- Bestimmen, ob das Datenfeld eine Vielzahl von Datenelementen umfasst; und
- falls ja, Erstellen eines datenelementspezifischen Randomisierungswertes für jedes Datenelement des Datenfeldes.

3. Verfahren nach einem der vorhergehenden Ansprüche, wobei der Schritt des Bestimmens (S2) eines Einheitsschlüssels für die Einheit umfasst:
- Auswählen eines Datenfeldes als eines Identifizierers der Einheit;
- Bestimmen des Einheitsschlüssels basierend auf den Daten in dem Datenfeldsatz als des Identifizierers der Einheit.

4. Verfahren nach einem der vorhergehenden Ansprüche, wobei der Schritt des Bestimmens (S2) eines Einheitsschlüssels für die Einheit umfasst:
- Bestimmen einer Prüfsumme basierend auf den Daten einer Vielzahl der Datenfelder der Einheit, wobei die Prüfsumme dem Einheitsschlüssel der Einheit entspricht.

5. Computerprogramm (100), das Anweisungen umfasst, die beim Ausführen des Programms durch eine Computervorrichtung die Computervorrichtung dazu veranlassen, das Verfahren nach einem der Ansprüche 1 bis 4 durchzuführen.

6. Computerlesbares Medium, das Anweisungen umfasst, die beim Ausführen durch eine Computervorrichtung die Computervorrichtung dazu veranlassen, das Verfahren nach einem der Ansprüche 1 bis 4 durchzuführen.

## Revendications

1. Procédé, exécuté par un programme informatique (100), pour anonymiser des données d'une pluralité de champs de données, le procédé comprenant les étapes consistant à :
- recevoir (S1) des données d'une entité comprenant une pluralité de champs de données de données à anonymiser ;
- déterminer (S2) une clé d'entité pour ladite entité ;
- générer (S3), pour chaque champ de données, une clé de chiffrement spécifique au champ de données sur la base des métadonnées de ce champ de données et de ladite clé d'entité ;
- générer (S4), pour chaque champ de données, une valeur de randomisation spécifique au champ de données sur la base des métadonnées de ce champ de données ;
- chiffrer (S5), pour chaque champ de données, ladite valeur de randomisation spécifique au champ de données au moyen de ladite clé de chiffrement spécifique au champ de données ;
- générer (S6), pour chaque champ de données, des données d'entité anonymisées à partir desdites données d'entité reçues en utilisant ladite valeur de randomisation spécifique au champ de données cryptées ; et
- stocker (S7) ladite clé d'entité, lesdites clés de chiffrement spécifiques au champ de données et lesdites valeurs de randomisation spécifiques au champ de données chiffrées ;
dans lequel l'étape consistant à générer (S6), pour chaque champ de données, des données anonymisées à partir desdites données d'entité reçues en utilisant ladite valeur de randomisation spécifique au champ de données cryptées, comprend en outre l'étape consistant à :
- déterminer, pour chaque champ de données, si lesdites données d'entité reçues dudit champ de données doivent être normalisées (S6A) en ajustant les données d'entité à une valeur dans une plage prédéterminée pour ce champ de données spécifique ; randomisées via une liste spécifique au champ (S6B) en substituant les données reçues de ce champ de données par une chaîne de texte de la liste spécifique au champ, dans lequel ladite chaîne de texte est randomisée en utilisant ladite valeur de randomisation spécifique au champ de données cryptées ; ou randomisées via un ensemble de règles de format spécifiques au champ (S6C) en substituant une partie des données d'entité reçues de ce champ de données en utilisant ladite valeur de randomisation spécifique au champ de données et déterminant, sur la base de la partie substituée des données d'entité reçues de ce champ de données, un somme de contrôle qui satisfait ledit ensemble de règles de format spécifiques au champ.

2. Procédé selon l'une quelconque des revendications précédentes, dans lequel l'étape de génération (S4), pour chaque champ de données, d'une valeur de randomisation spécifique au champ de données, comprend en outre les étapes consistant à :
- déterminer si le champ de données comprend une pluralité d'éléments de données ; et
- si oui, générer, pour chaque élément de données du champ de données, une valeur de randomisation spécifique à l'élément de données.

3. Procédé selon l'une quelconque des revendications précédentes, dans lequel l'étape de détermination (S2) d'une clé d'entité pour ladite entité comprend les étapes consistant à :
- sélectionner un champ de données en tant qu'identifiant de l'entité ;
- déterminer la clé d'entité sur la base des données du champ de données défini en tant qu'identifiant de l'entité.

4. Procédé selon l'une quelconque des revendications précédentes, dans lequel l'étape de détermination (S2) d'une clé d'entité pour ladite entité comprend :
- la détermination d'une somme de contrôle sur la base des données d'une pluralité de champs de données de l'entité, la somme de contrôle correspondant à la clé d'entité de l'entité.

5. Programme d'ordinateur (100), comprenant des instructions qui, lorsque le programme est exécuté par un dispositif informatique, amènent le dispositif informatique à exécuter le procédé selon l'une quelconque des revendications 1 à 4.

6. Support lisible par ordinateur comprenant des instructions qui, lorsqu'elles sont exécutées sur un dispositif informatique, amènent le dispositif informatique à effectuer le procédé selon l'une quelconque des revendications 1 à 4.
